# EUROPEAN PATENT SPECIFICATION

(11) **EP 4 358 255 B1**
(45) Date of publication and mention of the grant of the patent: **25.02.2026**
(21) Application number: 23812070.3
(22) Date of filing: 19.05.2023
(51) Int. Cl.: H01M 50/24, H01M 50/367, H01M 50/375, H01M 50/342, H01M 50/271, H01M 50/204, H01M 10/48, A62C 3/16, A62C 99/00, H01M 50/209, H01M 50/289, H01M 50/383

(54) **BATTERY PACK**
BATTERIEPACK
BLOC-BATTERIE

(30) Priority: 24.05.2022 KR 20220063181
(43) Date of publication of application: 24.04.2024
(73) Proprietor: LG Energy Solution, Ltd., Seoul 07335 (KR)
(72) Inventor: LEE, Jae Hyun, Daejeon 34122 (KR); SHIN, Ju Hwan, Daejeon 34122 (KR); LEE, Hyoung Suk, Daejeon 34122 (KR)
(74) Representative: Plasseraud IP
(86) International application number: PCT/KR2023/006812
(87) International publication number: WO 2023/229296

(56) References cited:
- WO-A1-2022/099662
- CN-A- 112 018 302
- KR-A- 20140 005 323
- KR-A- 20200 033 774
- KR-A- 20210 093 636
- KR-A- 20210 112 162
- KR-A- 20210 112 162
- KR-A- 20210 141 806

## Description

The present application provides a benefit of priority on the basis of Korean Patent Application No. 10 -2022-0063181, filed on May 24, 2022.

### [Technical Field]

The present invention relates to a battery pack.

### [Background Art]

Lithium secondary batteries have risks such as explosion and fire due to heat generation, and thus securing safety is one of the main challenges for lithium secondary batteries. When such an abnormal phenomenon occurs, if it is not responded to appropriately in the beginning, the internal temperature of the secondary battery increases rapidly due to heat generation, the rapid increase in temperature may cause thermal runaway, and the thermal runaway may lead to an explosion of the secondary battery, which may propagate to adjacent secondary batteries and cause significant damage to a battery pack.

In order to remove this risk, a control device is provided to monitor and control the voltage, current, or the like of the battery pack, or when a fire occurs in the battery pack, a device is externally provided to extinguish the fire, but there is a problem in that it is not possible to promptly and actively respond to a fire occurring in the battery pack with only these members at an early stage.

### [Related-Art Document]

Korean Patent Application Publication No. 10-2022-0004854

International (PCT) Application Publication No. WO2022/099662 discloses a case for a battery comprising a plurality of box walls, the plurality of box walls enclose a first chamber for accommodating battery cells, and at least one of the box walls is internally formed with a second chamber for accommodating fire-fighting agents. Wherein, the first chamber and the second chamber are configured to be able to communicate when the battery cell is thermally runaway, so that the fire fighting agent releases the fire fighting medium into the first chamber.

### [Disclosure]

### [Technical Problem]

Accordingly, the present invention is directed to providing a battery pack including a fire extinguishing device therein.

Other objects and advantages of the present invention may be understood from the following detailed description and will become more fully apparent from the embodiments of the present invention. In addition, it will be easily understood that the objects and advantages of the present invention may be implemented by the means shown in the appended claims and combinations thereof.

### [Technical Solution]

The present invention provides a battery pack configured to accommodate a battery module according to claim 1. Further embodiments of the invention are provided in the dependent claims.

### [Advantageous Effects]

A battery pack of the present invention can extinguish a fire occurring in a battery module accommodated therein by rapidly spraying and discharging an extinguishing gas when the fire occurs.

In addition, according to the present invention, a phenomenon in which the inside of a battery module overheats due to a high-temperature gas generated in the battery module can be prevented, so that the temperature can be lowered.

### [Brief Description of the Drawings]

FIG. 1 is a perspective view of a pack case included in a battery pack according to a first embodiment of the present invention.
FIG. 2 is a plan view of the pack case of (a) of FIG. 1.
FIG. 3 is a plan view of the pack case of (b) of FIG. 1.
FIG. 4 is a perspective view of the pack case included in the battery pack according to the first embodiment of the present invention and also illustrates a side frame with a portion cut out.
FIG. 5 is a view illustrating a cross section of the side frame included in the battery pack according to the first embodiment of the present invention.
FIG. 6 illustrates some of the side frame and a sealing plate that are adjacent to a module region.
FIG. 7 illustrates that the battery module is accommodated in the module region of FIG. 6.
FIG. 8 is a view schematically illustrating a process in which the sealing plate made of a thermoplastic material ruptures.
FIG. 9 illustrates some of the side frame and the sealing plate included in a battery pack according to a second embodiment of the present invention.
FIG. 10 illustrates a process in which the sealing plate coupled to a discharge port by a sealing resin ruptures.
FIG. 11 is a perspective view of a battery pack according to a third embodiment not forming part of the claimed invention.
FIG. 12 illustrates gas-filled parts formed inside the side frame in the battery pack of FIG. 11.

### [Best Mode]

Hereinafter, exemplary embodiments of the present invention will be described in detail with reference to the attached drawings.

The embodiments of the present invention are provided to more completely explain the present invention to those of ordinary skill in the art, and thus the shapes and sizes of components in the drawings may be exaggerated, omitted, or shown schematically for clarity of description. Thus, the size or proportion of each component does not fully reflect the actual size or proportion.

The present invention relates to a battery pack configured to accommodate a battery module B, and the battery pack of the present invention extinguishes a fire rapidly.

The battery pack of the present invention includes a pack case 1000 including a base plate 100, partition walls 300, and a side wall 200 including a gas-filled part 211 filled with an extinguishing gas G.

The extinguishing gas G used in the present invention is used for the purpose of extinguishing a fire or lowering a temperature when the fire occurs in the accommodated battery module B or when a high-temperature gas is generated in the battery module B, and for example, carbon dioxide or the like is used as the extinguishing gas G. However, the present invention is not limited thereto, and any material that can fulfill the purpose of the present invention may be used.

The battery pack of the present invention can be largely divided into two embodiments according to the structure of the side wall 200.

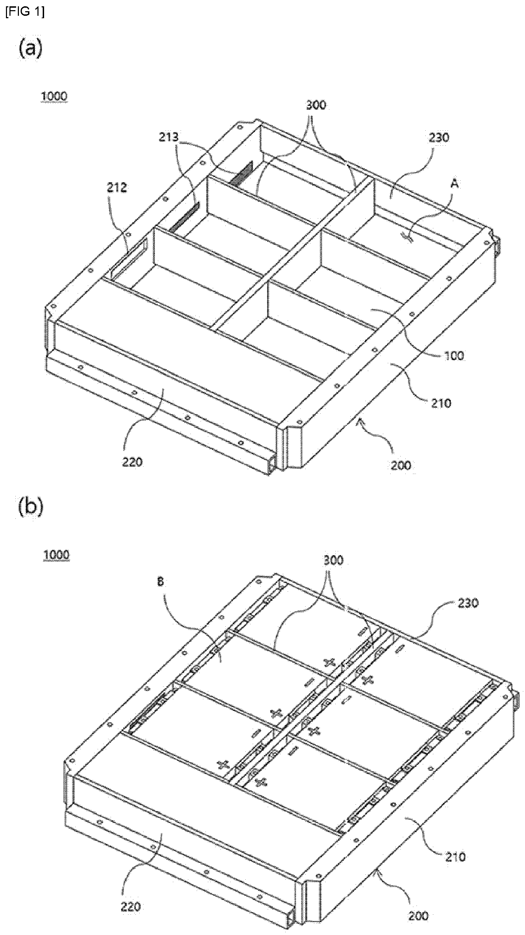

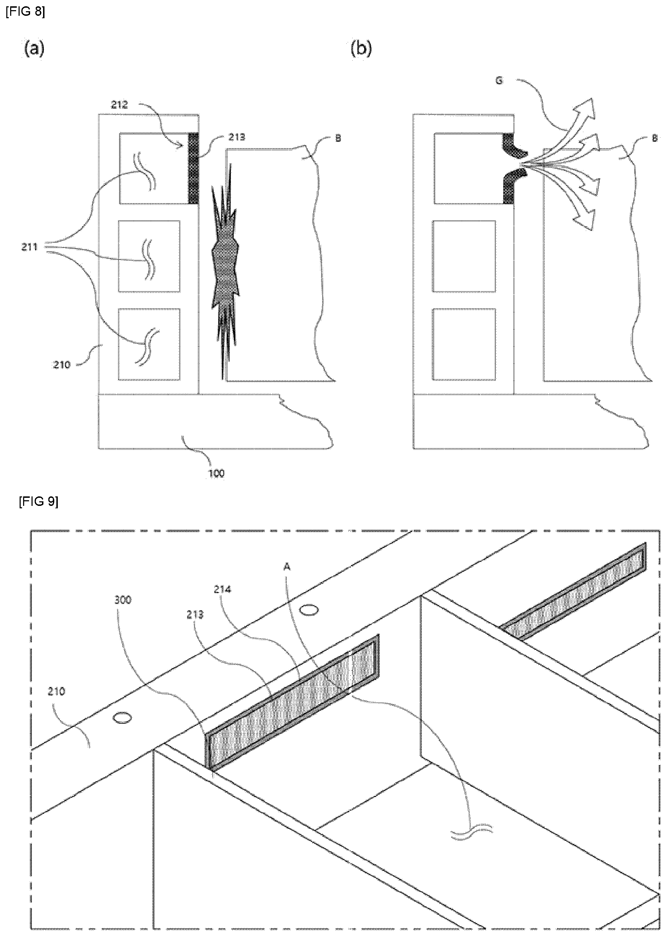

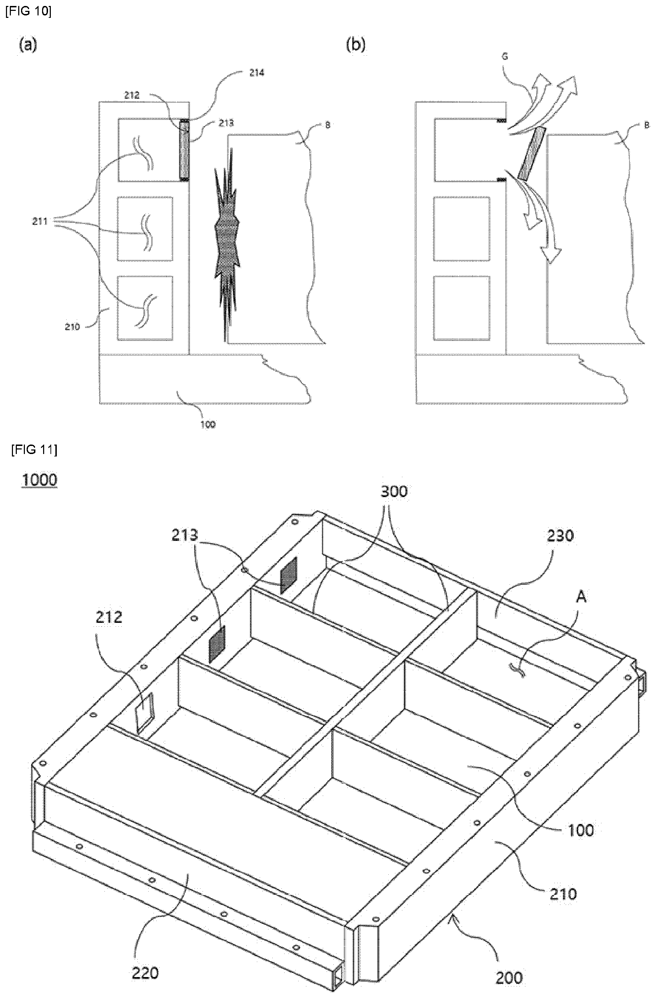

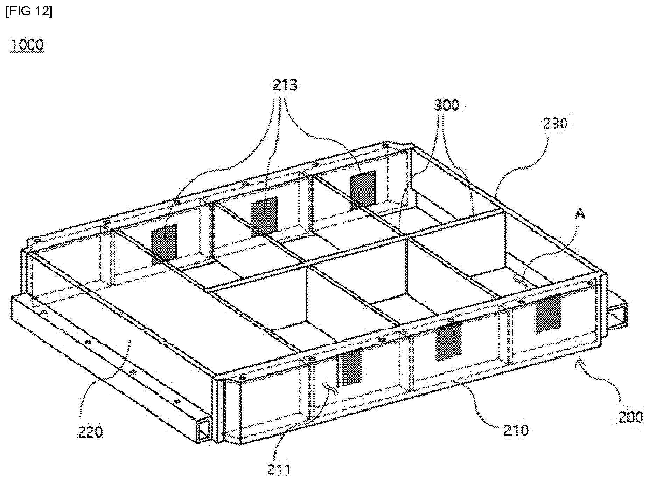

FIGS. 1 to 8 relate to a battery pack according to a first embodiment of the present invention, FIGS. 9 and 10 relate to a battery pack according to a second embodiment of the present invention, and FIGS. 11 and 12 relate to a battery pack according to a third embodiment not forming part of the claimed invention.

Hereinafter, the battery pack of the present invention will be described with reference to the drawings.

### (First embodiment)

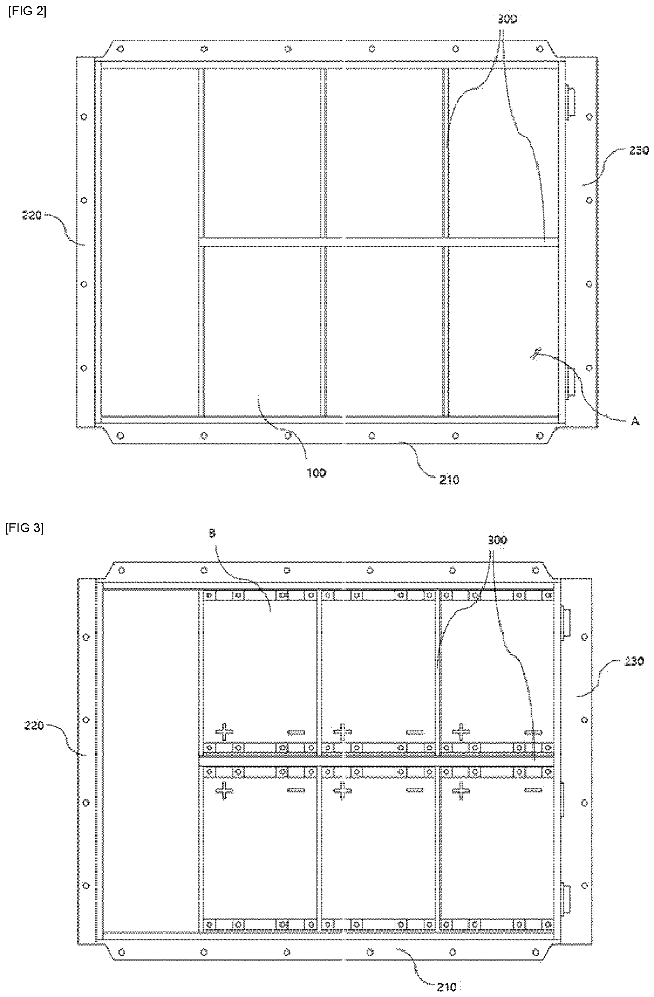

FIG. 1 is a perspective view of the pack case 1000 included in the battery pack according to the first embodiment of the present invention, FIG. 2 is a plan view of the pack case 1000 of (a) of FIG. 1, and FIG. 3 is a plan view of the pack case 1000 of (b) of FIG. 1.

According to (a) of FIG. 1 and FIG. 2, the pack case 1000 of the present invention includes the base plate 100, the side wall 200, and the partition walls 300.

As illustrated in the drawings, the pack case 1000 includes a plurality of module regions A in which a plurality of battery modules B are separated and accommodated. The module regions A are formed by being partitioned by the side wall 200 and the partition walls 300.

The base plate 100 includes the plurality of module regions A in which the battery modules B are located. More specifically, as illustrated in (b) of FIG. 1 and FIG. 3, the battery modules B are inserted into the module regions A, respectively, and seated on the base plate 100.

The side wall 200 is formed to extend along an edge of the base plate 100 to surround the module regions A and is vertically coupled to the base plate 100.

The partition walls 300 are coupled to the side wall 200 and partition the base plate 100 to form the plurality of module regions A. More specifically, the partition walls 300 include a main partition wall 300 extending in a lengthwise direction of the base plate 100 so as to cross the base plate 100, and sub-partition walls 300 each having both ends coupled to the main partition wall 300 and the side wall 200 and spaced apart from each other by a predetermined interval along the lengthwise direction of the main partition wall 300 and coupled to the base plate 100.

Further, although not illustrated in the drawing, the battery pack of the present invention may further include an upper cover (not shown) that is coupled to an open upper portion of the pack case 1000 so that the module region A is covered thereby. Thus, the module region A may be sealed by being surrounded by the upper cover, the base plate 100, the side wall 200, and the partition wall 300.

The side wall 200 of the present invention is composed of a front frame 220, a rear frame 230, and side frames 210. More specifically, as illustrated in FIGS. 1 to 3, the side wall 200 includes the front frame 220 provided on one side of the base plate 100 in the lengthwise direction, the rear frame 230 provided to face the front frame 220, and the side frames 210 provided in a hollow shape on both sides of the base plate 100 in a widthwise direction.

The side wall 200 includes the gas-filled part 211 filled with a high-pressure extinguishing gas G therein, a discharge port 212 that is open to allow the gas-filled part 211 to communicate with the module region A, and a sealing plate 213 coupled to the discharge port 212. More specifically, the gas-filled part 211 is included in the side frame 210.

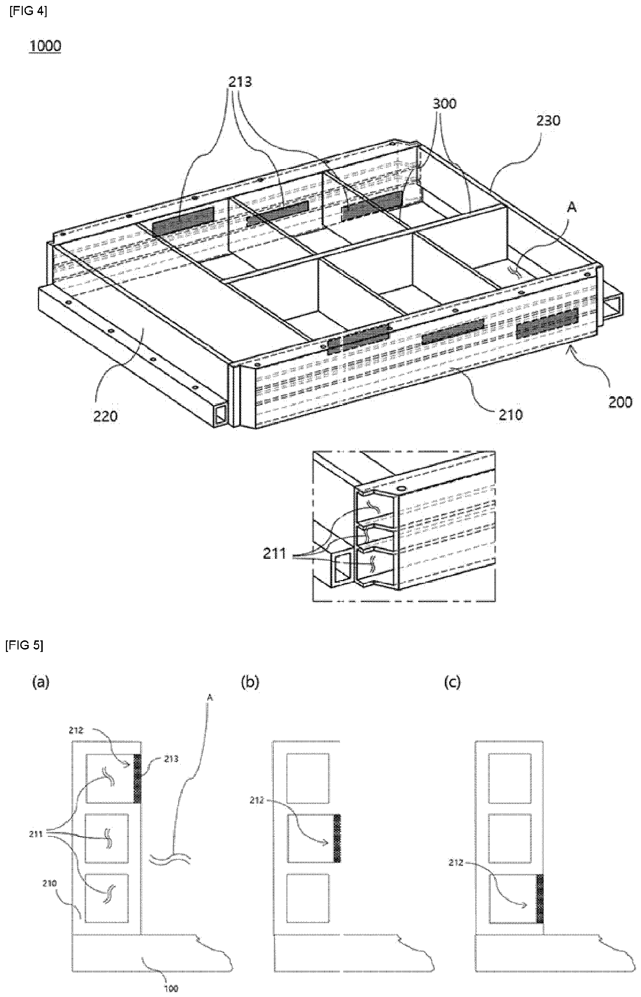

FIG. 4 is a perspective view of the pack case 1000 included in the battery pack according to the first embodiment of the present invention and also illustrates the side frame 210 with a portion cut out.

According to FIG. 4, each side frame 210 includes a gas-filled part 211 corresponding to the module region A abutting the side frame 210.

The gas-filled parts 211 are separated from each other so as not to communicate with each other, and each gas-filled part 211 is filled with the high-pressure extinguishing gas G.

Any one gas-filled part 211 included in the side frame 210 corresponds to any one module region A adjacent to the side frame 210. That is, the side frame 210 includes a plurality of gas-filled parts 211 respectively corresponding to thes A adjacent thereto.

More specifically, the gas-filled part 211 extends in a lengthwise direction of the side frame 210, and the extending gas-filled part 211 communicates with the corresponding module region A through the discharge port 212. Thus, the gas-filled part 211 and the discharge port 212 of the present invention are formed to correspond to the number of the module regions A included in the pack case 1000.

The plurality of gas-filled parts 211 included in the battery pack according to the first embodiment of the present invention are separated from each other in a thickness direction of the side frame 210 and are included in the side frame 210. In an example, when three module regions A are adjacent to one side frame 210 as illustrated in FIG. 4, three gas-filled parts 211 that do not communicate with each other are sequentially formed in the thickness direction of the side frame 210 and included in the side frame 210. In addition, each gas-filled part 211 communicates with the corresponding module region A through the discharge port 212 that is open in the side wall 200 adjacent to the corresponding module region A. Accordingly, the sealing plates 213 for blocking the discharge ports 212 corresponding to the gas-filled parts 211 may also be formed at different heights in the module regions A, respectively.

FIG. 5 is a view illustrating a cross section of the side frame 210 included in the battery pack according to the first embodiment of the present invention.

According to FIG. (a) of 5, a gas-filled part 211 is formed in an upper portion of the side frame 210, and a sealing plate 213 is coupled to a discharge port 212, which is open toward a module region A corresponding to the gas-filled part 211. According to (b) of FIG. 5, a gas-filled part 211 is formed in a middle portion of the side frame 210, and a sealing plate 213 is coupled to a discharge port 212, which is open toward a module region A corresponding to the gas-filled part 211. According to (c) of FIG. 5, a gas-filled part 211 is formed in a lower portion of the side frame 210, and a sealing plate 213 is coupled to a discharge port 212, which is open toward a module region A corresponding to the gas-filled part 211.

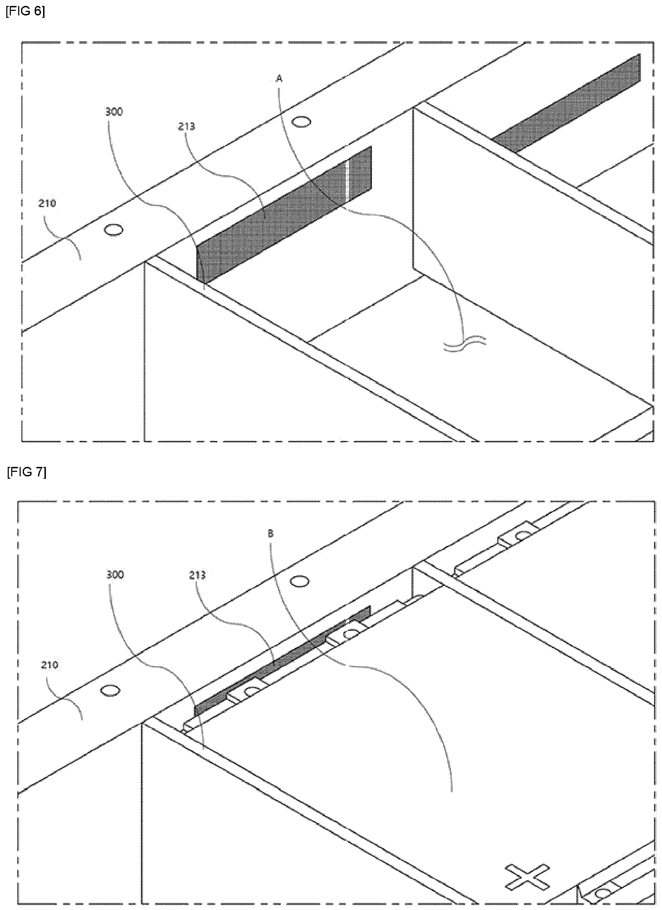

FIG. 6 illustrates some of the side frame 210 and the sealing plate 213 that are adjacent to the module region A, and FIG. 7 illustrates that the battery module B is accommodated in the module region A of FIG. 6.

As illustrated in FIG. 6, the discharge port 212 maintains a state of being blocked by the sealing plate 213 coupled to the discharge port 212 so that the extinguishing gas G filled in the gas-filled part 211 is sealed.

In the battery pack of the present invention, the sealing plate 213 that blocks the discharge port 212 is separated in response to a change in temperature of the module region A corresponding to the discharge port 212. That is, as illustrated in FIG. 7, when the battery module B accommodated in the module region A deteriorates or a high-temperature gas is discharged, the sealing plate 213 adjacent to the battery module B may be weakened by heat generated from the battery module B and separated from the discharge port 212.

By the separation of the sealing plate 213, the extinguishing gas G filled at high pressure is discharged through the open discharge port 212. A fire or the like in the battery module B accommodated in the corresponding module region A may be extinguished by the discharge of the extinguishing gas G.

The sealing plate 213 is coupled to the discharge port 212 by a thermoplastic. Thus, the sealing plate 213 may be separated from the discharge port 212 as the thermoplastic is melted by the high-temperature heat generated in the module region A.

The thermoplastic may be, for example, a polyethylene resin, a polypropylene resin, or the like. However, the present invention is not limited thereto, and any material having a property of being melted or partially weakened at a predetermined temperature while having excellent strength against pressure may be used as the thermoplastic material.

More specifically, the sealing plate 213 is formed of a thermoplastic material and may be manufactured by injection or compression molding.

The sealing plate 213 made of the thermoplastic material may be melted by heat above the melting point of the thermoplastic to be separated from the discharge port 212 or rupture.

FIG. 8 is a view schematically illustrating a process in which the sealing plate 213 made of a thermoplastic material ruptures.

As illustrated in (a) of FIG. 8, when an anomaly in which there is a fire or high-temperature gas in the battery module B occurs, the sealing plate 213 adjacent to the module region A in which the corresponding battery module B is accommodated starts to be weakened or melted by heat. Subsequently, as illustrated in (b) of FIG. 8, the weakened sealing plate 213 is unable to withstand the pressure of the extinguishing gas G filled at high pressure in the gas-filled part 211 and ruptures, and the extinguishing gas G may be discharged from the discharge port 212 due to the rupture of the sealing plate 213 so that the temperature of the module region A may be lowered.

The battery pack of the present invention may further include a sensor (not shown) in each module region A in which the battery module B is seated.

The sensor is used for the purpose of detecting heat, pressure, or a fire, detects an anomaly exceeding a preset temperature or pressure value, or detects the occurrence of a fire.

The battery pack of the present invention may further include a fixing member (not shown) that is interlocked with the sensor and slidably coupled to the discharge port 212 of the side frame 210 in order to fix the sealing plate 213. In this case, the fixing member moves backward from the sealing plate 213 in response to a signal from the sensor so that the sealing plate 213 advances in a direction of the module region A.

Further, the battery pack of the present invention may further include a striking member (not shown) that is interlocked with the sensor and coupled to the side frame 210 so as to move forward toward and backward from the sealing plate 213 to strike and rupture the sealing plate 213. In this case, the striking member moves forward toward the sealing plate 213 to strike the sealing plate 213 in response to a signal from the sensor.

### (Second embodiment)

Unlike the battery pack according to the first embodiment, in which the sealing plate 213 is made of a thermoplastic material, in the battery pack according to the second embodiment of the present invention, a sealing resin 214 including a thermoplastic material is formed along the edge of the sealing plate 213 to allow the sealing plate 213 to be coupled to the discharge port 212.

FIG. 9 illustrates some of the side frame 210 and the sealing plate 213 included in the battery pack according to the second embodiment of the present invention.

As illustrated in FIG. 9, the battery pack according to the second embodiment of the present invention may further include the sealing resin 214 interposed between the sealing plate 213 and the discharge port 212.

The sealing plate 213 is separated from the discharge port 212 as the sealing resin 214 formed along the edge of the sealing plate 213 is melted by high-temperature heat.

FIG. 10 schematically illustrates a process in which the sealing plate 213 coupled to the discharge port 212 by the sealing resin 214 ruptures.

As illustrated in (a) of FIG. 10, when an anomaly in which there is a fire or high-temperature gas in the battery module B occurs, the sealing resin 214 formed on the edge of the sealing plate 213 adjacent to the module region A in which the corresponding battery module B is accommodated starts to be weakened or melted by heat. Subsequently, as illustrated in (b) FIG. 10, the weakened sealing resin 214 is unable to withstand the pressure of the extinguishing gas G filled at high pressure in the gas-filled part 211 and ruptures, and the sealing plate 213 coupled to the discharge port 212 by the sealing resin 214 is pushed by the pressure of the extinguishing gas G and moves away from the discharge port 212. The extinguishing gas G is discharged from the discharge port 212 by the separation of the sealing plate 213 so that the temperature of the module region A may be lowered.

### (Third embodiment not forming part of the claimed invention)

In the battery pack according to the third embodiment of the present invention, the plurality of gas-filled parts 211 are formed separately from each other in the lengthwise direction of the side frame 210. That is, unlike the battery pack according to the first embodiment, in which the gas-filled parts 211 formed inside the side frame 210 are formed to extend in the lengthwise direction of the side frame 210, in the battery pack according to the third embodiment, each gas-filled part 211 is separated to correspond to each module region A and included in the side frame 210.

FIG. 11 is a perspective view of the battery pack according to the third embodiment not forming part of the claimed invention, and FIG. 12 illustrates the gas-filled parts 211 formed inside the side frame 210 in the battery pack of FIG. 11.

As illustrated in FIG. 11, the discharge port 212 is formed in the side frame 210 to correspond to a corresponding section in each module region A, and the sealing plate 213 is coupled to each corresponding discharge port 212.

Further, a plurality of gas-filled parts 211 included in the side frame 210 are formed separately from each other in the lengthwise direction of the side frame 210. In an example, when three module regions A are adjacent to one side frame 210 as illustrated in FIG. 12, three gas-filled parts 211 that do not communicate with each other are sequentially formed in the lengthwise direction of the side frame 210 and included in the side frame 210. In addition, each gas-filled part 211 communicates with the corresponding module region A through the discharge port 212 that is open in the side wall 200 adjacent to the corresponding module region A.

The present invention has been described above in more detail with reference to the drawings and embodiments.

### [Description of Reference Numerals]

1000: pack case
100: base plate
200: side wall
210: side frame
211: gas-filled part
212: discharge port
213: sealing plate
214: sealing resin
220: front frame
230: rear frame
300: partition wall
A: module region
B: battery module
G: extinguishing gas

## Claims

1. A battery pack configured to accommodate a battery module (B), the battery pack comprising a pack case (1000) including:
a base plate (100) including a plurality of module regions (A) each having the battery module (B) located therein;
a side wall (200) extending along an edge of the base plate (100) and vertically coupled to the base plate (100) to surround the module regions (A); and
a partition wall (300) coupled to the side wall (200) and configured to partition the base plate (100) to form the plurality of module regions (A),
the side wall (200) includes a front frame (220) provided on one side of the base plate (100) in a lengthwise direction, a rear frame (230) provided to face the front frame (220), and side frames (210) provided in a hollow shape on both sides of the base plate (100) in a widthwise direction,
wherein each of the side frame (210) includes:
a plurality of gas-filled parts (211), each filled with a high-pressure extinguishing gas therein, separated from each other in a thickness direction of the side frame (210), and corresponding to the module regions (A),
a plurality of discharge ports (212) that are open to allow the gas-filled parts (211) to communicate with the module regions (A), and
a plurality of sealing plate (213) coupled to the discharge ports (212) to seal the extinguishing gas, ,
wherein the sealing plate (213) is coupled to the discharge port (212) so as to be separable in response to a temperature change in the module region (A).

2. The battery pack of claim 1, wherein the sealing plate (213) is coupled to the discharge port (212) by a thermoplastic so that it can be separated from the discharge port (212) as the thermoplastic is melted by heat above a melting point of the thermoplastic.

3. The battery pack of claim 1, wherein the sealing plate (213) is formed of a thermoplastic material.

4. The battery pack of claim 1, wherein
a sealing resin (214), which is formed of a thermoplastic material along an edge of the sealing plate (213), is interposed between the sealing plate (213) and the discharge port (212) of the side wall (200), so that the sealing plate (213) can be separated from the discharge port (212) as the sealing resin (214) is melted by heat above a melting point of the thermoplastic.

5. The battery pack of claim 1, further comprising an upper cover coupled to an open upper portion of the pack case (1000) so that the module region (A) is covered thereby,
wherein the module region (A) is sealed by being surrounded by the upper cover, the base plate (100), the side wall (200), and the partition wall (300).

6. The battery pack of claim 1, wherein the extinguishing gas includes carbon dioxide.

7. The battery pack of claim 1, further comprising a sensor configured to detect heat, pressure, or a fire in the module region (A).

## Patentansprüche

1. Batteriepack, welcher dazu eingerichtet ist, ein Batteriemodul (B) aufzunehmen, wobei der Batteriepack ein Packgehäuse (1000) umfasst, welches umfasst:
eine Basisplatte (100), welche eine Mehrzahl von Modulregionen (A) umfasst, welche jeweils das Batteriemodul (B) darin angeordnet aufweisen;
eine Seitenwand (200), welche sich entlang eines Randes der Basisplatte (100) erstreckt und vertikal mit der Basisplatte (100) gekoppelt ist, um die Modulregionen (A) zu umgeben; und
eine Unterteilungswand (300), welche mit der Seitenwand (200) gekoppelt ist und dazu eingerichtet ist, die Basisplatte (100) zu unterteilen, um die Mehrzahl von Modulregionen (A) zu bilden,
wobei die Seitenwand (200) einen vorderen Rahmen (220), welcher an einer Seite der Basisplatte (100) in einer Längsrichtung bereitgestellt ist, einen hinteren Rahmen (230), welcher bereitgestellt ist, um dem vorderen Rahmen (220) zugewandt zu sein, und Seitenrahmen (210) umfasst, welche in einer Hohlform an beiden Seiten der Basisplatte (100) in einer Breitenrichtung bereitgestellt sind,
wobei jeder des Seitenrahmens (210) umfasst:
eine Mehrzahl von gasgefüllten Teilen (211), welche jeweils mit einem Hochdruck-Löschgas darin gefüllt sind, welche in einer Dickenrichtung des Seitenrahmens (210) voneinander getrennt sind und welche den Modulregionen (A) entsprechen,
eine Mehrzahl von Auslassmündungen (212), welche geöffnet sind, um eine Kommunikation der gasgefüllten Teile (211) mit den Modulregionen (A) zuzulassen, und
eine Mehrzahl von Dichtplatten (213), welche mit den Auslassmündungen (212) gekoppelt sind, um das Löschgas abzudichten,
wobei die Dichtplatte (213) mit der Auslassmündung (212) gekoppelt ist, um in Folge einer Temperaturänderung in der Modulregion (A) trennbar zu sein.

2. Batteriepack nach Anspruch 1, wobei die Dichtplatte (213) mit der Auslassmündung (212) durch einen Thermoplasten gekoppelt ist, sodass sie von der Auslassmündung (212) getrennt werden kann, wenn der Thermoplast durch Wärme über einem Schmelzpunkt des Thermoplasten geschmolzen ist.

3. Batteriepack nach Anspruch 1, wobei die Dichtplatte (213) aus einem thermoplastischen Material gebildet ist.

4. Batteriepack nach Anspruch 1, wobei
ein Dichtharz (214), welches aus einem thermoplastischen Material entlang eines Randes der Dichtplatte (213) gebildet ist, zwischen der Dichtplatte (213) und der Auslassmündung (212) der Seitenwand (200) eingefügt ist, sodass die Dichtplatte (213) von der Auslassmündung (212) getrennt werden kann, wenn das Dichtharz (214) durch Wärme über einem Schmelzpunkt des Thermoplasten geschmolzen ist.

5. Batteriepack nach Anspruch 1, ferner umfassend eine obere Abdeckung, welche mit einem offenen, oberen Abschnitt des Packgehäuses (1000) gekoppelt ist, sodass die Modulregion (A) dadurch abgedeckt ist,
wobei die Modulregion (A) abgedichtet ist, indem sie durch die obere Abdeckung, die Basisplatte (100), die Seitenwand (200) und die Unterteilungswand (300) umgeben ist.

6. Batteriepack nach Anspruch 1, wobei das Löschgas Kohlenstoffdioxid umfasst.

7. Batteriepack nach Anspruch 1, ferner umfassend einen Sensor, welcher dazu eingerichtet ist, Wärme, Druck oder ein Feuer in der Modulregion (A) zu detektieren.

## Revendications

1. Bloc-batterie configuré pour accueillir un module de batterie (B), le bloc-batterie comprenant un boîtier de bloc (1000) comportant :
une plaque de base (100) comportant une pluralité de régions de module (A) ayant chacune le module de batterie (B) situé dans celle-ci ;
une paroi latérale (200) s'étendant le long d'un bord de la plaque de base (100) et accouplée verticalement à la plaque de base (100) pour entourer les régions de module (A) ; et
une paroi de séparation (300) accouplée à la paroi latérale (200) et configurée pour diviser la plaque de base (100) pour former la pluralité de régions de module (A),
la paroi latérale (200) comporte un cadre avant (220) prévu d'un côté de la plaque de base (100) dans un sens de la longueur, un cadre arrière (230) prévu pour faire face au cadre avant (220), et des cadres latéraux (210) prévus avec une forme creuse des deux côtés de la plaque de base (100) dans un sens de la largeur,
dans lequel chacun des cadres latéraux (210) comporte :
une pluralité de parties remplies de gaz (211), chacune remplie d'un gaz d'extinction à haute pression à l'intérieur, séparées les unes des autres dans un sens de l'épaisseur du cadre latéral (210), et correspondant aux régions de module (A),
une pluralité d'orifices d'évacuation (212) qui sont ouverts pour permettre aux parties remplies de gaz (211) de communiquer avec les régions de module (A), et
une pluralité de plaques d'étanchéité (213) accouplées aux orifices d'évacuation (212) pour bloquer le gaz d'extinction,
dans lequel la plaque d'étanchéité (213) est accouplée à l'orifice d'évacuation (212) de manière à être séparable en réponse à un changement de température dans la région de module (A).

2. Bloc-batterie selon la revendication 1, dans lequel la plaque d'étanchéité (213) est accouplée à l'orifice d'évacuation (212) par un thermoplastique de sorte qu'elle puisse être séparée de l'orifice d'évacuation (212) lorsque le thermoplastique fond par la chaleur au-dessus d'un point de fusion du thermoplastique.

3. Bloc-batterie selon la revendication 1, dans lequel la plaque d'étanchéité (213) est constituée d'un matériau thermoplastique.

4. Bloc-batterie selon la revendication 1, dans lequel
une résine d'étanchéité (214), qui est constituée d'un matériau thermoplastique le long d'un bord de la plaque d'étanchéité (213), est interposée entre la plaque d'étanchéité (213) et l'orifice d'évacuation (212) de la paroi latérale (200), de sorte que la plaque d'étanchéité (213) puisse être séparée de l'orifice d'évacuation (212) lorsque la résine d'étanchéité (214) est fondue par de la chaleur au-dessus d'un point de fusion du thermoplastique.

5. Bloc-batterie selon la revendication 1, comprenant en outre un couvercle supérieur accouplé à une portion supérieure ouverte du boîtier de bloc (1000) de sorte que la région de module (A) soit recouverte par celui-ci,
dans lequel la région de module (A) est étanchéifiée en étant entourée par le couvercle supérieur, la plaque de base (100), la paroi latérale (200) et la paroi de séparation (300).

6. Bloc-batterie selon la revendication 1, dans lequel le gaz d'extinction comprend du dioxyde de carbone.

7. Bloc-batterie selon la revendication 1, comprenant en outre un capteur configuré pour détecter de la chaleur, une pression ou du feu dans la région de module (A).
